# EUROPEAN PATENT SPECIFICATION

(11) **EP 0 384 054 B1**
(45) Date of publication and mention of the grant of the patent: **27.10.1993**
(21) Application number: 89301828.3
(22) Date of filing: 24.02.1989
(51) Int. Cl.: C23C 30/00, C23C 28/00, C23C 8/08, C23F 11/00

(54) **A corrosion-resistant article**
Korrosionsfester Artikel
Article résistant à la corrosion

(43) Date of publication of application: 29.08.1990
(73) Proprietor: EXXON RESEARCH AND ENGINEERING COMPANY, Florham Park, New Jersey 07932-0390 (US)
(72) Inventor: Ramanarayanan, Trikur Anantharaman, Somerset, NJ 08873 (US)
(74) Representative: Fletcher Watts, Susan J.

(56) References cited:
- GB-A- 272 610
- GB-A- 1 088 122
- US-A- 3 769 098
- US-A- 4 763 729
- US-A- 4 820 591
- CHEMICAL ABSTRACTS, vol. 94, no. 10, March 1981, Columbus, Ohio, US; p. 257, no. 69704r; & JP-A-80 100 983
- PATENT ABSTRACTS OF JAPAN, vol. 6, no. 208 (C-130)[1086], 20 October 1982; & JP-A-57 116 769
- PATENT ABSTRACTS OF JAPAN, vol. 9, no. 241 (C-306)[1964], 27 September 1985; & JP-A-60 100 658
- WERKSTOFFEINSATZ UND KORROSIONSSCHUTZ IN DER CHEMISCHEN INDUSTRIE, VEB Dt. Verlag für Grundstoffindustrie, 1986, 4th ed.; pp. 187-201, 205, 206#

## Description

The invention relates to a corrosion-resistant article and to a method for making it.

In various applications, and particularly in deep, gas and oilwell production and drilling applications, there is a need for material that is corrosion resistant, and particularly resistant to corrosion caused by sulfide environments, such as those containing hydrogen sulfide. In deep-well production and drilling applications, commonly termed sour well applications, the drilling components, and particularly the tubing extending into the well, are subject to environments containing various levels of hydrogen sulfide often in combination with carbon dioxide, brine and various hydrocarbons.

In "Werkstoffeinsatz und Korrosionsschutz in der Chemischen Industrie", VEB Deutscher Verlag für Grundstoffindustrie, 4. überarbeitete Auflage, 1986, pp. 205, 206, there is disclosure of materials for use in the storage, handling and processing of petroleum. Materials mentioned for storage tanks include austenitic CrNi steels. For petroleum handling or processing, the use of 12CrMo20.5 and 13% Cr steels is mentioned, as full materials or cladding, to combat sulfur corrosion. Other materials mentioned are certain CuNiFe types; a NiCrMoCu austenitic steel; and titanium.

However, for reasons of economy, it is necessary in practice in petroleum operations that tubing employed is made from carbon steel. In the presence of hydrogen sulfide encountered in sour well applications, corrosion of the carbon steel occurs as a result of the iron reacting to form iron-sulfide phases, particularly on the inner wall surfaces of the tubing extending into the well and subjected to the sulfide environment.

More particularly, in sour gas environments, an iron-containing alloy, e.g. carbon steel, undergoes attack by sulfur-containing compounds such as hydrogen sulfide, resulting in the formation of a scale of various ferrous sulfide phases such as pyrite and marcasite (FeS₂); pyrrhotite (Fe₁₋ₓS) and mackinawite (Fe₁₊ₓS).

Accordingly, it would be highly advantageous to improve the corrosion-resistance of an article, especially one made from low-cost materials, including carbon steel.

In one respect, the invention provides a composite, corrosion-resistant article, comprising (i) a metal substrate, (ii) a refractory metal layer of niobium, tantalum, zirconium, hafnium or vanadium, metallurgically bonded to the metal substrate and (iii) a coating of a sulfide of the corresponding refractory metal on said refractory metal layer. Preferably, the metal substrate is an iron-based alloy, especially carbon steel.

Preferred refractory metal layers are of niobium or tantalum.

The article of the invention finds particular utility in the manufacture of tubing with the sulfide coating being on an interior portion of the tubing.

In another aspect, the invention provides a method for producing a composite, corrosion-resistant article, comprising (i) metallurgically bonding a refractory metal layer of niobium, tantalum, zirconium, hafnium, or vanadium to a metal substrate and (ii) forming on said refractory metal layer a sulfide coating of the corresponding refractory metal. The refractory metal layer is metallurgically bonded to the substrate. This prevents the corrosive media, such as hydrogen sulfide, from penetrating between the substrate, e.g. carbon steel, and the refractory metal layer on which the refractory metal sulfide is formed.

The refractory metal layer may be applied on the substrate by various techniques, such as cladding or coextrusion. Other suitable practices for application of the refractory metal layer may include, vapor deposition, weld deposit and plasma spraying.

The present invention is based on our finding that ferrous ions are rapidly transported through such sulfide phases, in particular, the pyrrhotite phase, and react with the sulfur-containing compound at the outer surface leading to the corrosion process. It has been found that the iron ion is rapidly transferred through the iron sulfide formation, which is typically in the form of a sulfide scale. The propogation or transport of the iron ion through the iron sulfided steel is relatively rapid and thus the corrosion is severe upon exposure of carbon steel tubing to hydrogen sulfide environments.

Although the primary corrosive media in sour well applications for which the articles of the invention find primary utility is hydrogen sulfide, it is to be understood that these environments also contain corrosive media including carbon dioxide, brine and various hydrocarbons.

The sulfide coating may be provided in situ on the refractory metal layer by a hydrogen sulfide atmosphere present in the working environment. This sulfide coating so formed has been found to provide a barrier or resistant layer with respect to corrosive propagation into the article.

The accompanying drawings, together with the Examples, illustrate embodiments of the invention and, together with the description, serve to explain the principles and advantages of the invention.

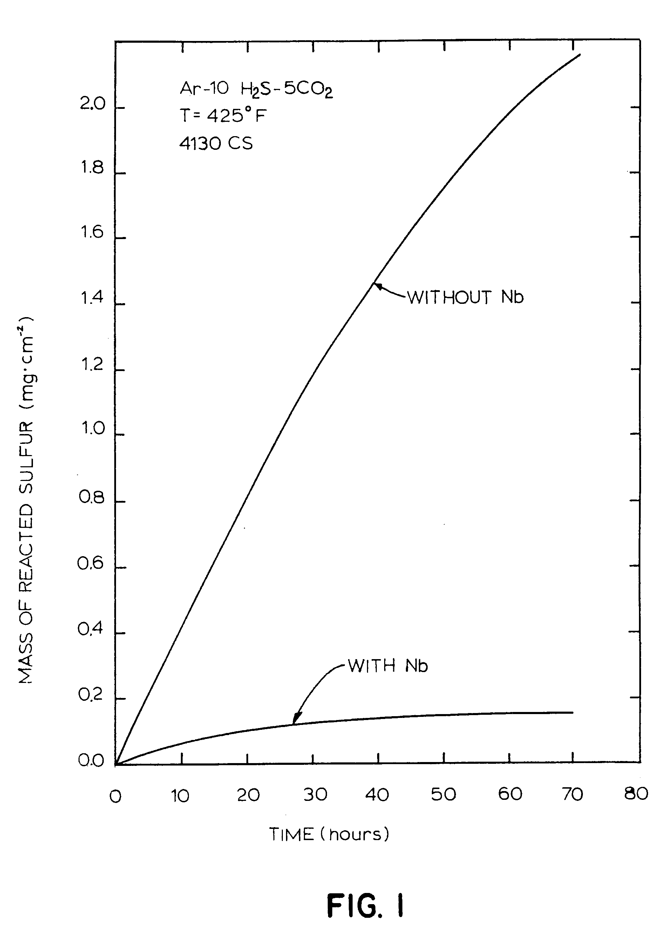

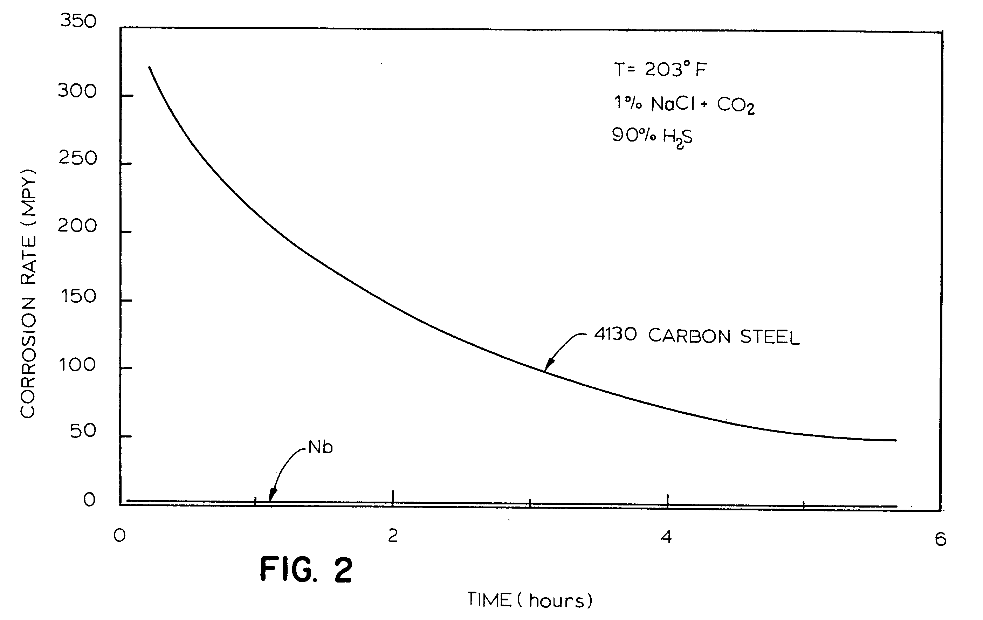

Figure 1 of the drawings is a plot of corrosion rate on both an uncoated carbon steel surface and a niobium-coated carbon steel surface; and Figure 2 is a plot comparing the corrosion resistance of conventional carbon steel with niobium.

Reference will now be made in detail to presently preferred embodiments of the invention, examples of which are described below and illustrated in the accompanying drawing.

### Example 1

Investigations were performed on a laboratory scale on carbon steel having a layer of niobium. A 10 niobium layer was applied to a 4130 carbon steel coupon surface by sputtering and was subsequently exposed to a Ar-10/H₂S-5/CO₂ environment at 218°C (425°F). The rate of sulfide growth on the coated sample is compared with that on the carbon steel surface in Figure 1. The results show that the niobium layer is extremely effective in suppressing corrosion. Figure 1 also shows that the corrosion resistance is due to a thin niobium sulfide surface coating.

### Example 2

Investigations were also performed on a laboratory scale on niobium exposed to a 1% aqueous sodium chloride solution saturated with carbon dioxide/90% hydrogen sulfide gas mixture at 95°C (203°F). As compared to carbon steel similarly exposed, the corrosion rate of niobium is negligible.

## Claims

1. A composite, corrosion-resistant article, comprising (i) a metal substrate, (ii) a refractory metal layer of niobium, tantalum, zirconium, hafnium or vanadium, metallurgically bonded to the metal substrate and (iii) a coating of a sulfide of the corresponding refractory metal on said refractory metal layer.

2. An article as claimed in claim 1, wherein the refractory metal layer is of niobium or tantalum.

3. An article as claimed in claim 1 or claim 2, wherein said metal substrate is an iron-based alloy, preferably carbon steel.

4. An article as claimed in any preceding claim, in the form of tubing with said sulfide coating being on an interior portion of said tubing.

5. A method for producing a composite, corrosion-resistant article, comprising (i) metallurgically bonding a refractory metal layer of niobium, tantalum, zirconium, hafnium, or vanadium to a metal substrate and (ii) forming on said refractory metal layer a sulfide coating of the corresponding refractory metal.

6. A method as claimed in claim 4, wherein the refractory metal layer is of niobium or tantalum.

7. A method as claimed in claim 5 or claim 6, wherein said metal substrate is an iron-based alloy, preferably carbon steel.

8. A method as claimed in any one of claims 5 to 7, wherein said article is formed into tubing with said sulfide coating being on an interior portion of said tubing.

9. A method as claimed in any one of claims 5 to 8, wherein the sulfide coating is formed by means of a hydrogen sulfide containing atmosphere.

10. The use of an article as claimed in any one of claims 1 to 4 in a hydrogen sulfide containing atmosphere.

## Patentansprüche

1. Zusammengesetzter, korrosionsfester Gegenstand, der (i) ein Metallsubstrat, (ii) eine metallurgisch an das Metallsubstrat gebundene feuerfeste Metallschicht aus Niob, Tantal, Zirkonium, Hafnium oder Vanadium und (iii) eine Beschichtung aus einem Sulfid des entsprechenden feuerfesten Metalls auf der feuerfesten Metallschicht umfaßt.

2. Gegenstand nach Anspruch 1, bei dem die feuerfeste Metallschicht aus Niob oder Tantal ist.

3. Gegenstand nach Anspruch 1 oder Anspruch 2, bei dem das Metallsubstrat eine auf Eisen basierende Legierung ist, vorzugsweise Kohlenstoffstahl.

4. Gegenstand nach einem der vorhergehenden Ansprüche in Form eines Rohrs, wobei die Sulfidbeschichtung sich an einem innenliegenden Teil des Rohrs befindet.

5. Verfahren zur Herstellung eines zusammengesetzten, korrosionsfesten Gegenstands, bei dem (i) eine feuerfeste Schicht aus Niob, Tantal, Zirkonium, Hafnium oder Vanadium metallurgisch an ein Metallsubstrat gebunden wird und (ii) auf der feuerfesten Metallschicht eine Sulfidbeschichtung des entsprechenden feuerfesten Metalls gebildet wird.

6. Verfahren nach Anspruch 5, bei dem die feuerfeste Metallschicht aus Niob oder Tantal ist.

7. Verfahren nach Anspruch 5 oder Anspruch 6, bei dem das Metallsubstrat eine auf Eisen basierende Legierung ist, vorzugsweise Kohlenstoffstahl.

8. Verfahren nach einem der Ansprüche 5 bis 7, bei dem der Gegenstand zu einem Rohr geformt wird, wobei die Sulfidbeschichtung sich auf einem innenliegenden Teil des Rohrs befindet.

9. Verfahren nach einem der Ansprüche 5 bis 8, bei dem die Sulfidbeschichtung durch eine Schwefelwasserstoff enthaltende Atmosphäre gebildet wird.

10. Verwendung eines Gegenstands gemäß einem der Ansprüche 1 bis 4 in einer Schwefelwasserstoff enthaltenden Atmosphäre.

## Revendications

1. Article composite résistant à la corrosion comprenant (i) un substrat métallique, (ii) une couche de métal réfractaire constituée de niobium, de tantale, de zirconium, d'hafnium ou de vanadium et liée métallurgiquement au substrat métallique et (iii) un revêtement d'un sulfure du métal réfractaire correspondant sur ladite couche de métal réfractaire.

2. Article selon la revendication 1 dans lequel la couche de métal réfractaire est constituée de niobium ou de tantale.

3. Article selon la revendication 1 ou 2, dans lequel ledit substrat métallique est un alliage à base de fer, de préférence de l'acier au carbone.

4. Article selon l'une quelconque des revendications précédentes sous là forme d'un tube dans lequel ledit revêtement de sulfure se trouve sur une partie interne dudit tube.

5. Procédé de production d'un article composite résistant à la corrosion consistant (i) à lier métallurgiquement une couche de métal réfractaire de niobium, de tantale, de Zirconium, d'hafnium ou de vanadium à un substrat métallique et (ii) à former sur ladite couche de métal réfractaire un revêtement de sulfure du métal réfractaire correspondant.

6. Procédé selon la revendication 4, dans lequel la couche de métal réfractaire est constituée de niobium ou de tantale.

7. Procédé selon la revendication 5 ou 6, dans lequel ledit substrat métallique est un alliage à base de fer, de préférence, de l'acier au carbone.

8. Procédé selon l'une quelconque des revendications 5 à 7, dans lequel ledit article est conformé en tube, ledit revêtement de sulfure se trouvant sur une partie interne dudit tube.

9. Procédé selon l'une quelconque des revendications 5 à 8, dans lequel le revêtement de sulfure est formé via une atmosphère contenant du sulfure d'hydrogène.

10. Emploi d'un article selon l'une quelconque des revendications 1 à 4 dans une atmosphère contenant du sulfure d'hydrogène.
